# EUROPEAN PATENT SPECIFICATION

(11) **EP 2 843 534 B1**
(45) Date of publication and mention of the grant of the patent: **25.04.2018**
(21) Application number: 14178417.3
(22) Date of filing: 24.07.2014
(51) Int. Cl.: G06F 3/0488, G06F 3/0354, G06F 3/046, G06F 3/0346, G06F 1/32, G06F 3/041

(54) **Method for display control and electronic device thereof**
Verfahren zur Anzeigesteuerung und elektronische Vorrichtung dafür
Procédé de commande d'affichage et son dispositif électronique

(30) Priority: 03.09.2013 KR 20130105239
(43) Date of publication of application: 04.03.2015
(73) Proprietor: Samsung Electronics Co., Ltd., Gyeonggi-do 443-742 (KR)
(72) Inventor: Sim, Bo-Hyun, Incheon (KR); Koh, Sang-Hyuk, Jeju-do (KR); Kim, Tae-Yeon, Seoul (KR); Kim, Hee-Jin, Seoul (KR); Lee, Hye-Mi, Incheon (KR); Jang, Si-Hak, Gyeonggi-do (KR)
(74) Representative: HGF Limited

(56) References cited:
- EP-A2- 2 752 737
- EP-A2- 2 787 414
- US-A1- 2002 103 616
- US-A1- 2010 045 626
- US-A1- 2013 009 907
- US-A1- 2013 019 174
- US-B2- 8 099 124

## Description

### TECHNICAL FIELD

The present disclosure relates to method for display control and an electronic device thereof.

### BACKGROUND

Electronic devices have become necessities for modem people as they are easy to carry. Electronic devices have developed into multimedia devices which provide various multimedia services such as a voice and video communication service, an information input and output service, and a data transmission and reception service.

As electronic devices increasingly provide multimedia services, the amount of information which must be processed and displayed has increased. Accordingly, there is a growing interest in electronic devices having touch screens which may improve space utilization and increase the size of a display unit of the electronic device.

A touch screen is an input and output device for inputting and displaying information on one screen. Accordingly, when a touch screen is installed in an electronic device, the electronic device may increase a display size by removing a separate input device such as a keypad. For example, the electronic device may use an electronic pen as an input device.

After a user of the electronic device performs an input on a display of an electronic device using an electronic pen, when he or she pauses, he or she may put down the electronic pen, operate a power button of the electronic device, and turn off the display. If the user wants to use the electronic pen again, he or she must pick up the put electronic device, operate the power button, and turn on the display. That is, when the user uses the electronic pen, a plurality of operations for pausing use of the electronic device or resuming use of the electronic device are performed.

Published US patent applications US2010/045626, US2013/009907 and US2002/103616 each disclose portable terminals having stylus-type input means. In each case, a recess or receptacle for the stylus has a mechanism for detecting that the stylus is present or absent. Presence of the stylus in the receptacle is associated with the display of the terminal being powered off or entering a low power consumption mode.

Therefore, there is a need to provide an improved method of pausing the use of an electronic device or resuming the use when the user uses an electronic pen.

### SUMMARY

To address the above-discussed deficiencies, a method of operating an electronic device according to claim 1 and an electronic device according to claim 7 are defined. The dependent claims define further advantegeous modifications.

Another aspect of the disclosure provides a computer program comprising instructions arranged, when executed, to implement a method in accordance with any one of the above-described aspects. A further aspect provides machine-readable storage storing such a program.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating configuration of an electronic device according to one embodiment of the present disclosure;
FIG. 2 is a block diagram illustrating detailed configuration of hardware according to one embodiment of the present disclosure;
FIG. 3 is a block diagram illustrating detailed configuration of a programming module according to one embodiment of the present disclosure;
FIG. 4 is a flowchart illustrating a process of changing a state of a display based on state information of an electronic pen in an electronic device according to one embodiment of the present disclosure;
FIG. 5 is a flowchart illustrating a process of changing a state of a display based on a time when a coordinate of an electronic pen is fixed in an electronic device according to one embodiment of the present disclosure;
FIGs. 6A to 6F illustrate a process of changing a state of a display based on state information of an electronic pen in an electronic device according to one embodiment of the present disclosure;
FIG. 7 is a flowchart illustrating a process of changing a state of a display based on an area including a coordinate of an electronic pen in an electronic device according to one embodiment of the present disclosure;
FIGs. 8A and 8B illustrate a process of changing a state of a display based on an area including a coordinate of an electronic pen in an electronic device according to one embodiment of the present disclosure;
FIG. 9 is a flowchart illustrating a process of changing a state of a display based on a slope of an electronic pen in an electronic device according to one embodiment of the present disclosure;
FIGs. 10A and 10B illustrate a process of changing a state of a display based on a slope of an electronic pen in an electronic device according to one embodiment of the present disclosure;
FIG. 11 is a flowchart illustrating a process of turning on a display when a coordinate of an electronic pen is changed after a state of a display is changed in an electronic device according to one embodiment of the present disclosure;
FIG. 12 is a flowchart illustrating a process of turning on a display when a slope of an electronic pen is changed after a state of a display is changed in an electronic device according to another embodiment of the present disclosure;
FIG. 13 illustrates an electronic device and an electronic pen for describing when the electronic pen operates by an ElectroMagnetic Induction (EMI) type according to one embodiment of the present disclosure; and
FIGs. 14A and 14B illustrate an example of verifying an angle of an electronic pen and an electronic device when the electronic pen operates by an EMI type according to one embodiment of the present disclosure.

### DETAILED DESCRIPTION

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases. Throughout the description and claims of this specification, the singular encompasses the plural unless the context otherwise requires. In particular, where the indefinite article is used, the specification is to be understood as contemplating plurality as well as singularity, unless the context requires otherwise. Features, integers or characteristics described in conjunction with a particular aspect, embodiment or example of the disclosure are to be understood to be applicable to any other aspect, embodiment or example described herein unless incompatible therewith. It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

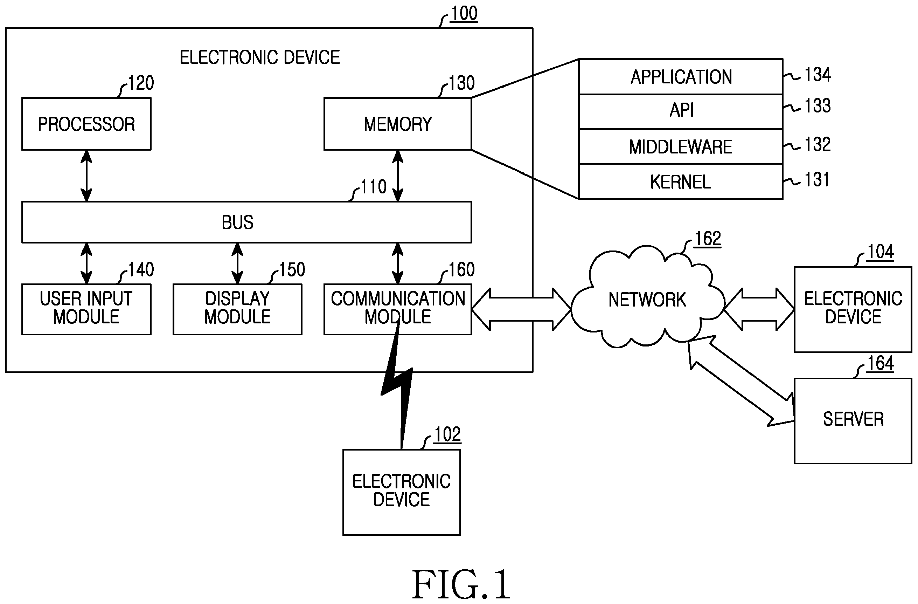

FIGURES 1 through 14B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Exemplary embodiments of the present disclosure will be described herein below with reference to the accompanying drawings. In the following description, well-known functions or constructions are not described in detail since they would obscure the disclosure in unnecessary detail.

An electronic device according to various embodiments of the present disclosure may be one or combination of one or more of various devices which include a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), a Moving Picture Experts Group (MPEG) layer 3 (MP3) player, a mobile medical device, an electronic bracelet, an electronic necklace, electronic accessories, a camera, a wearable device, an electronic watch, a wristwatch, smart home appliances (e.g., a refrigerator, an air conditioner, a cleaner, a cybot, a TeleVision (TV), a Digital Versatile Disc (DVD) player, an audio, an oven, a microwave oven, a washing machine, an air cleaner, and an electronic picture frame), various medical devices (e.g., a Magnetic Resonance Artery (MRA), a Magnetic Resonance Imaging (MRI), a CT (Computed Tomography), an imaging apparatus, and a ultrasonic machine), a navigation device, a Global Positioning System (GPS) receiver, an Event Data Recorder (EDR), a Flight Data Recorder (FDR), a set-top box, a TV box (e.g., Samsung HomeSync™, Apple TV™, or Google TV™), an electronic dictionary, a car infotainment device, electronic equipment for ship (e.g., a navigation device for ship and a gyrocompass), an air electronic device, a security device, electronic clothes, an electronic key, a camcorder, a game console, a Head Mounted Display (HMD), a flat panel display, an electronic album, a part of furniture or a building/structure including a communication function, an electronic board, an electronic signature input device, or a projector. It is obvious to a person skilled in the art that the electronic device according to various embodiments of the present disclosure is not limited to the above-described devices.

FIG. 1 is a block diagram illustrating configuration of an electronic device according to one embodiment of the present disclosure.

Referring to FIG. 1, the electronic device denoted by 100 includes a bus 110, a processor 120, a memory 130, a user input module 140, a display module 150 and a communication module 160.

The bus 110 may be a circuit which connects components (e.g., the processor 120, the memory 130, the user input module 140, the display module 150, or the communication module 160) included in the electronic device 100 with each other and transmits communications (e.g., a control message) between the components.

The processor 120 may receive commands from the components included in the electronic device 100 through the bus 110, decode the received commands, and perform calculation or data processing according to the decoded commands.

The memory 130 stores commands or data which are received from the processor 120 or other components (e.g., the user input module 140, the display module 150, and the communication module 160) or are generated by the processor 120 or other components. For example, the memory 130 may store state information of an electronic pen, which may include at least one of a coordinate of the electronic pen, information indicating whether a coordinate of the electronic pen is fixed, a time when a coordinate of the electronic pen is fixed, a slope of the electronic pen, or any combination. By "fixed" it is meant that the coordinate of the pen (for instance, relative to the electronic device) is substantially stationary.

Also, the memory 130 may include at least one programming module including a kernel 131, a middleware 132, an Application Programming Interface (API) 133 and an application 134. Herein, the at least one programming module may be software, firmware, hardware, or any combination of at least two or more of them.

The kernel 131 may control or manage system resources (e.g., the bus 110, the processor 120, or the memory 130) used to execute an operation or function implemented in the other programming modules (e.g., the middleware 132, the API 133, or the application 134). Also, the kernel 131 may provide an interface which may access a separate component of the electronic device 100 in the middleware 132, the API 133, or the application 134 and control or manage the separate component.

The middleware 132 may play a role as a go-between such that the API 133 or the application 134 communicates with the kernel 131 and transmits and receives data. Also, the middleware 132 may perform load balancing for work requests using a method of assigning priority which may use a system resource (the bus 110, the processor 120, or the memory 130) of the electronic device 100 to the work requests received from at least the one application 134.

The API 133 is an interface in which the application 134 may control a function provided from the kernel 131 or the middleware 132. The API 133 may include at least one interface or function for file control, window control, image processing, or text control.

The user input module 140 may receive commands or data from the user and transmit the received commands or data to the processor 120 or the memory 130 through the bus 110.

The display module 150 displays videos, images, or data to the user.

The communication module 160 may perform communication between the electronic device 100 and other electronic devices 102 and 104. Herein, the communication module 160 may support a local-area communication protocol (e.g., Wireless-Fidelity (Wi-Fi), BlueTooth (BT), or Near Field Communication (NFC)), or network communication (e.g., the Internet, a Local Area Network (LAN), a Wide Area Network (WAN), a telecommunication network, a cellular network, a satellite network, or a Plain Old Telephone Service (POTS)).

Each of the other electronic devices 102 and 104 may be the same type of device as the electronic device 100 or a different type of device.

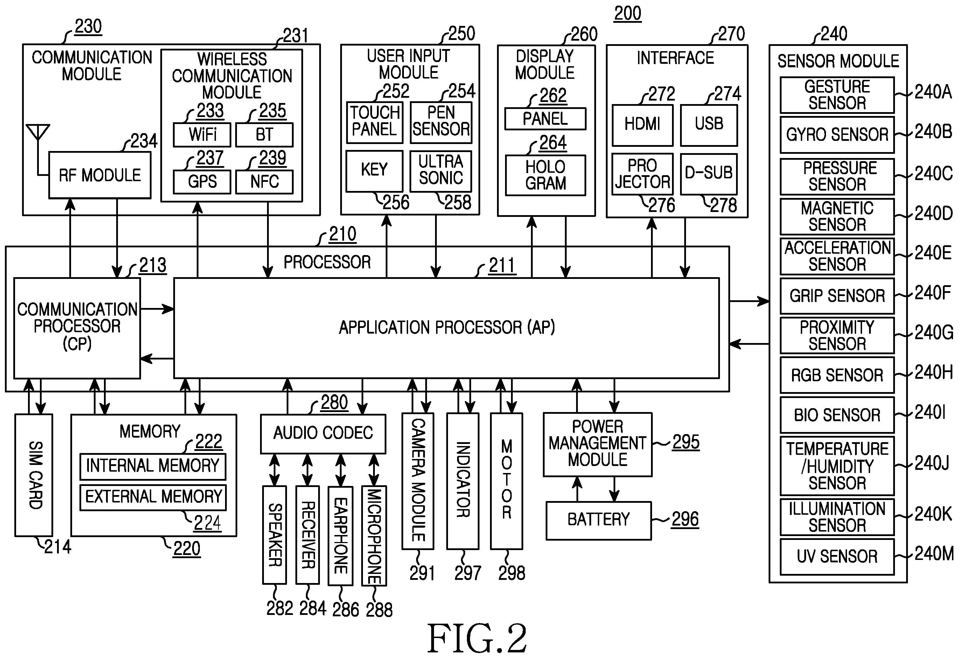

FIG. 2 is a block diagram illustrating detailed configuration of hardware according to one embodiment of the present disclosure.

Referring to FIG. 2, the hardware denoted by 200 may include one or more processors 210, a Subscriber Identity Module (SIM) card 214, a memory 220, a communication module 230, a sensor module 240, a user input module 250, a display module 260, an interface 270, an audio codec 280, a camera module 291, a power management module 295, a battery 296, an indicator 297, or a motor 298. Herein, the hardware 200 may be the electronic device 100 shown in FIG. 1.

The processor 210 may include one or more Application Processors (APs) 211 or one or more Communication Processors (CPs) 213. Herein, the processor 210 may be the processor 120 shown in FIG. 1.

The AP 211 and the CP 213 shown in FIG. 2 are shown to be included in the processor 210. However, the AP 211 and the CP 213 may be included in different IC packages, respectively. Also, the AP 211 and the CP 213 may be included in one IC package. In addition, the processor 210 may further include a Graphic Processing Unit (GPU).

The AP 211 may execute an Operating System (OS) or an application program, control a plurality of hardware or software components connected thereto, and process and calculate various data including multimedia data. Herein, the AP 211 may be implemented as System on Chip (SoC).

The CP 213 may perform a function for managing a data link in communication between other electronic devices connected with an electronic device including the hardware 200 through a network and change a communication protocol. Herein, the CP 213 may be implemented as SoC.

Also, the CP 213 may perform at least a part of a multimedia control function.

Also, the CP 213 may identify and authenticate a terminal in a communication network using an SIM (e.g., an SIM card 214). Herein, the CP 213 may provide a service including a voice call, a video call, a text message, or packet data to a user of the hardware 200.

The CP 213 may control data transmission and reception of the communication module 230.

In FIG. 2, components of the CP 213, the power management module 295, or the memory 220 are shown as components which are separated from the AP 211. However, the AP 211 may be implemented to include a part (e.g., the CP 213) of the components.

The AP 211 or the CP 213 may load and process commands or data received from at least one of a non-volatile memory or another component connected thereto to a volatile memory. Also, the AP 211 or the CP 213 may store data which are received from at least one of other components or are generated by at least one of other components in a non-volatile memory.

The SIM card 214 may be a card implementing an SIM. The SIM card 214 may be inserted into a slot formed in a specific position of the electronic device. The SIM card 214 may include unique identification information (e.g., an Integrated Circuit Card IDentity (ICCID)) or subscriber information (e.g., an International Mobile Subscriber Identity (IMSI)).

The memory 220 may include an internal memory 222 or an external memory 224. Herein, the memory 220 may be the memory 130 shown in FIG. 1.

The internal memory 222 may include at least one of a volatile memory (e.g., a Dynamic Random Access Memory (DRAM), a Static RAM (SRAM), or a Synchronous Dynamic RAM (SDRAM)) or a non-volatile memory (e.g., an One Time Programmable Read Only Memory (OTPROM), a PROM, an erasable PROM (EPROM), an Electrically Erasable PROM (EEPROM), a mask ROM, a flash ROM, a NAND flash memory, or a NOR flash memory). Herein, the internal memory 222 may have a type of a Solid State Disk (SSD).

The external memory 224 may include at least one of a Compact Flash (CF) card, a Secure Digital (SD) card, a micro-SD card, a mini-SD card, an extreme Digital (xD) card, or a memory stick.

The communication module 230 may include a wireless communication module 231 or a Radio Frequency (RF) module 234. Herein, the communication module 230 may be the communication module 160 shown in FIG. 1.

The wireless communication module 231 may provide a wireless communication function using RFs. For one example, the wireless communication module 231 may include a Wi-Fi module 233, a BT module 235, a GPS module 237, or an NFC module 239. For another example, the wireless communication module 231 may include a network interface (e.g., a LAN card) or a modem for connecting the hardware 200 with the network (e.g., the Internet, a LAN, a WAN, a telecommunication network, a cellular network, a satellite network, or a POTS).

The RF module 234 may control transmission and reception of data including an RF signal or a called electronic signal. For example, the RF module 234 may include a transceiver, a Power Amplifier Module (PAM), a frequency filter, or a Low Noise Amplifier (LNA). Also, the RF module 234 may further include components (e.g., conductors or conducting wires) for transmitting and receiving electromagnetic waves on a free space in wireless communication.

The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, and Blue (RGB) sensor 240H, a bio-sensor 240I, a temperature/humidity sensor 240J, an illumination sensor 240K, or a Ultra Violet (UV) sensor 240M. Also, the sensor module 240 may measure a physical quantity or sense an operation state of the electronic device, and convert the measured or sensed information into an electric signal. For example, the sensor module 240 may include an ElectroMyoGraphy (EMG) sensor, an ElectroEncephaloGram (EEG) sensor, an ElectroCardioGram (ECG) sensor, or a fingerprint sensor. Also, the sensor module 240 may further include a control circuit for controlling at least one or more sensors included therein.

The user input module 250 may include a touch panel 252, a pen sensor 254, a key 256, or an ultrasonic input device 258. Herein, the user input module 250 may be the user input module 140 shown in FIG. 1.

The touch panel 252 may recognize touch input by at least one of a capacitive type, a resistive type, an infrared type, or an ultrasonic type. Herein, the touch panel 252 may further include a controller. In case of the capacity type, the touch panel 252 may recognize not only direct touch input but also proximity touch input. The touch panel 252 may further include a tactile layer. Herein, the touch panel 252 may provide a tactile response to the user.

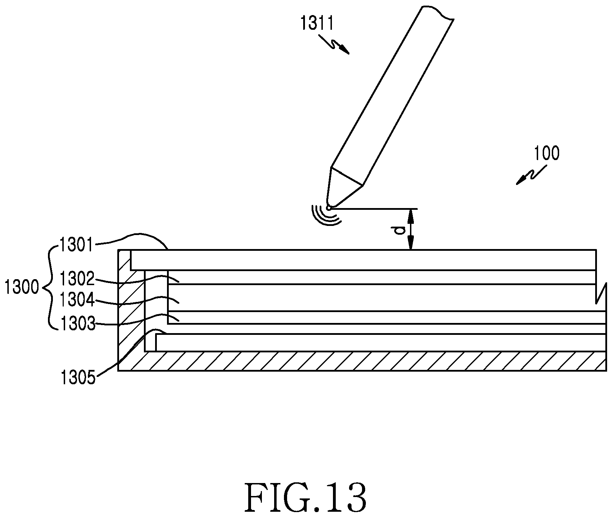

The pen sensor 254 may be implemented using the same or a similar method as the method used to receive a touch input of the user or using a separate sheet for recognition. For example, the pen sensor 254 may be, as shown in FIG. 13, an EMI type. A description will be given for the EMI type with reference to FIGs. 13 to 14B.

The key 256 may include a keypad or a touch key.

The ultrasonic input device 258 is a device which may sense sound waves using a microphone 288 and verify data in the electronic device through a pen which generates ultrasonic waves. The ultrasonic input device 258 may perform wireless recognition.

The hardware 200 may receive input of the user from an external device (e.g., the network 162 of FIG. 1, a computer, or the server 164 of FIG. 1) connected with the communication module 230 using the communication module 230.

The display module 260 may include a panel 262 or a hologram 264. Herein, the display module 260 may be the display module 150 shown in FIG. 1.

The panel 262 may be a Liquid Crystal Display (LCD) or an Active Matrix-Organic Light-Emitting Diode (AM-OLED). Also, the panel 262 may be flexible, transparent, or wearable. Herein, the panel 262 and the touch panel 252 may be integrated with each other to constitute one module.

The hologram 264 shows stereoscopic images on the air using light interference.

In addition, the display module 260 may further include a control circuit for controlling the panel 262 or the hologram 264.

The interface 270 may include a High Definition Multimedia Interface (HDMI) 272, a Universal Serial Bus (USB) interface 274, a projector 276, a D-sub (subminiature) interface 278, a Secure Digital/MultiMedia Card (SD/MMC) interface, or an Infrared Data Association (IrDA) interface.

The audio codec 280 may convert voices and electronic signals in a two-way direction. For example, the audio codec 280 may convert voice information input or output through a speaker 282, a receiver 284, an earphone 286, or the microphone 288.

The camera module 291 may capture images and videos. For example, the camera module 291 may include one or more image sensors (e.g., a front lens or a rear lens), an Image Signal Processor (ISP), or a flash LED.

The power management module 295 may manage power of the hardware 200. For example, the power management module 295 may include a Power Management Integrated Circuit (PMIC), a charging IC, or a battery gauge. The PMIC may be mounted in an IC or an SoC semiconductor.

A charging method of the power management module 295 may be classified into a wire charging method or a wireless charging method.

The charging IC may charge a battery and prevent inflow of overvoltage or overcurrent from a charger. Herein, the charging IC may include a charging IC for at least one of the wire charging method or the wireless charging method. The wireless charging method is a magnetic resonance method, a magnetic induction method, or an electromagnetic wave method. In the wireless charging method, additional circuits (e.g., a coil loop, a resonance circuit, and a rectifier circuit) for wireless charging may be added.

The battery gauge may measure the remaining capacity of the battery 296, voltage in charging, current, or a temperature.

The battery 296 may generate electricity and supply power. For example, the battery 296 may be a rechargeable battery.

The indicator 297 may indicate a specific state (e.g., a booting state, a message state, or a charging state) of the hardware 200 or a part of the hardware (e.g., the AP 211).

The motor 298 may convert an electric signal into a mechanical vibration.

A Micro Control Unit (MCU) may control the sensor module 240.

In addition, the hardware 200 may further include a processing device (e.g., a GPU) for supporting a mobile TV. For example, the processing device for supporting the mobile TV may process media data according to the standard of Digital Multimedia Broadcasting (DMB), Digital Video Broadcasting (DVB), or mediaflow.

Names of components of hardware according to some embodiments of the present disclosure may differ according to the type of electronic device. The hardware according to some embodiments of the present disclosure may include at least one of the above described components. Some components of the hardware may be omitted or the hardware may further include other additional components. Also, some of the components of the hardware according to one embodiment of the present disclosure are combined and configured as one device. Therefore, one device may equally perform functions of the corresponding components before some of the components are combined.

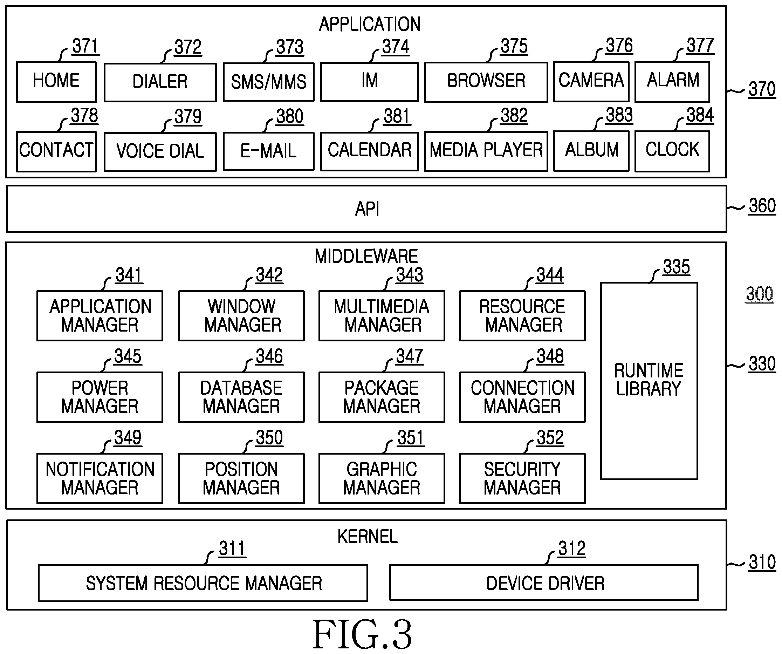

FIG. 3 is a block diagram illustrating detailed configuration of a programming module according to one embodiment of the present disclosure.

Referring to FIG. 3, the programming module denoted by 300 may include a kernel 310, middleware 330, an API 360, or an application 370. The programming module 300 may be included (e.g., stored) in the electronic device 100 (e.g., the memory 130) shown in FIG. 1. At least a part of the programming module 300 may be configured by software, firmware, hardware, or combination of two or more of them. The programming module 300 may include an OS which controls resources, implemented in the hardware 200 of FIG. 2, which is related to the electronic device 100 or include the plurality of applications 370 executed in the OS. For example, the OS may include Android, iOS, Windows, Symbian, Tizen, or Bada.

The kernel 310 may include a system resource manager 311 or a device driver 312. Herein, the kernel 310 may be the kernel 131 shown in FIG. 1.

The system resource manager 311 may control, assign, or collect system resources. For example, the system resource manager 311 may include a process management unit, a memory management unit, or a file system management unit.

The device driver 312 may include a display driver, a camera driver, a Bluetooth driver, a shared memory driver, a USB driver, a keypad driver, a Wi-Fi driver, an audio driver, or an Inter Process Communication (IPC) driver.

The middleware 330 may include a plurality of modules which are previously implemented to provide functions the application 370 needs in common. Herein, the middleware 330 may be the middleware 132 shown in FIG. 1. Also, the middleware 330 may provide functions through the API 360 such that the application 370 uses limited system resources in the electronic device efficiently. For example, the middleware 330 may include at least one of a runtime library 335, an application manager 341, a window manager 342, a multimedia manager 343, a resource manager 344, a power manager 345, a database manager 346, a package manager 347, a connection manager 348, a notification manager 349, a position manager 350, a graphic manager 351, or a security manager 352.

The runtime manager 335 may include a library module used by a compiler to add a new function through a programming language while the application 370 is executed. For example, the runtime manager 335 may perform a function for input and output, memory management, or an arithmetic function.

The application manager 341 may manage a life cycle of at least one of the applications 370.

The window manager 342 may manage Graphic User Interface (GUI) resources used on a screen of the electronic device.

The multimedia manager 343 may ascertain a format necessary for reproducing various media files and encode or decode a media file using a codec corresponding to the corresponding format.

The resource manager 344 may manage source codes of at least one of the applications 370 and resources of the memory 130 shown in FIG. 1 or a separate storage.

The power manager 345 may act with a Basic Input Output System (BIOS), manage a battery or a power source, and provide power information necessary for an operation.

The database manager 346 may perform a management operation to generate, search, or change a database to be used in at least one of the applications 370. For example, the database manager 346 may manage harmful site information (e.g., a Uniform Resource Locator (URL) or an Internet Protocol (IP) address) stored in the memory 130 shown in FIG. 1.

The package manager 347 may manage installation or update of an application distributed by a type of a package file.

The connection manager 348 may manage wireless connections using, for instance, Wi-Fi or BT.

The notification manager 349 may display or notify events of an arrival message, an appointment, and proximity notification by a method which is not disturbed to the user.

The position manager 350 may manage position information of the electronic device.

The graphic manager 351 may manage a graphic effect to be provided to the user or a UI related to the graphic effect.

The security manager 352 may provide all security functions necessary for system security or user authentication.

In addition, when the electronic device 100 shown in FIG. 1 has a phone function, the middleware 330 may further include a call manager for managing a voice or video call function of the electronic device 100.

The middleware 330 may generate and use a new middleware module through various function combinations of internal component modules. The middleware may provide a module which specializes while being classified according to kinds of operating systems to provide a differentiated function. Also, the middleware 330 may dynamically delete some of old components or add new components. Therefore, some of components described in various embodiments of the present disclosure may be omitted, other components may be further added, or components having different names for performing similar functions may be replaced.

The API 360 as a set of API programming functions may be provided as different components according to OSs. Herein, the API 360 may be the API 133 shown in FIG. 1. For example, in case of Android or iOS, one API set may be provided while being classified according to platforms. In case of Tizen, two or more API sets may be provided.

The application 370 may include a preload application or a third party application. Herein, the application 370 may be the application 134 shown in FIG. 1.

The programming module 300 may be implemented as instructions stored in a storing medium which is readable by at least a computer. When an instruction may be executed by the one or more processors 210 shown in FIG. 2, the one or more processors 210 may perform a function corresponding to the instruction. The storing medium which is readable by the computer may be the memory 220 shown in FIG. 2. Also, a part of the programming module 300 may be implemented (e.g., executed) by the processor 210. A part of the programming module 300 may include a module for performing one or more functions, a program, a routine, an instruction set, or a process.

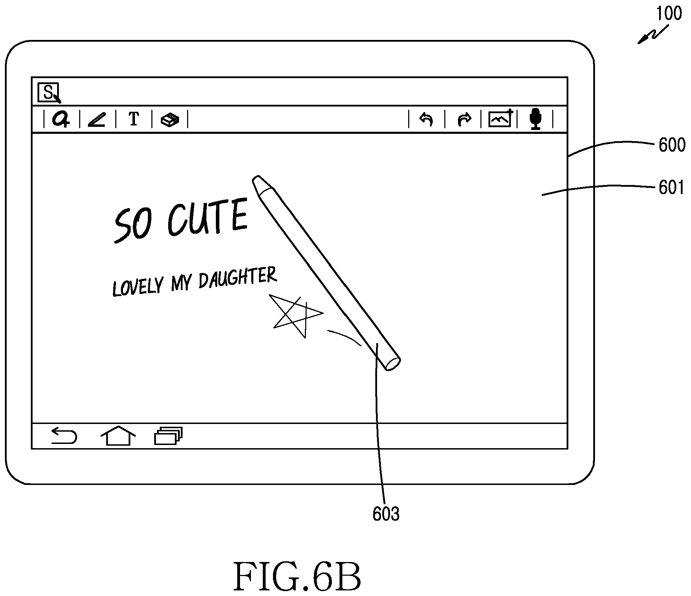

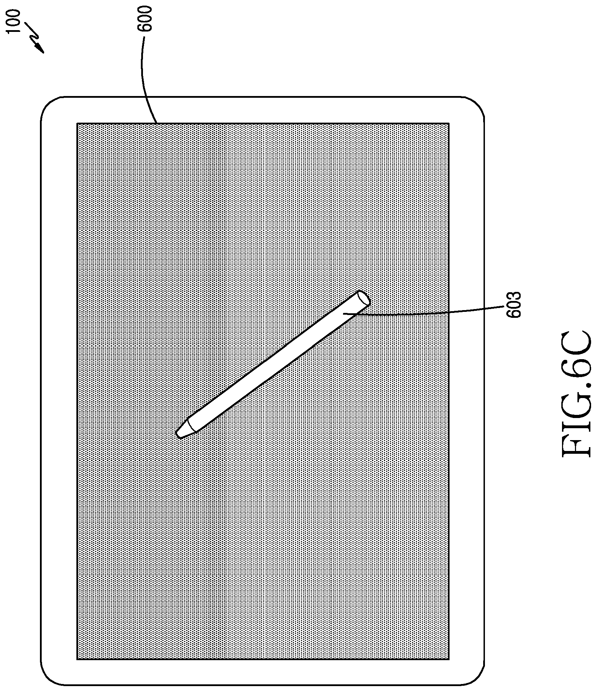

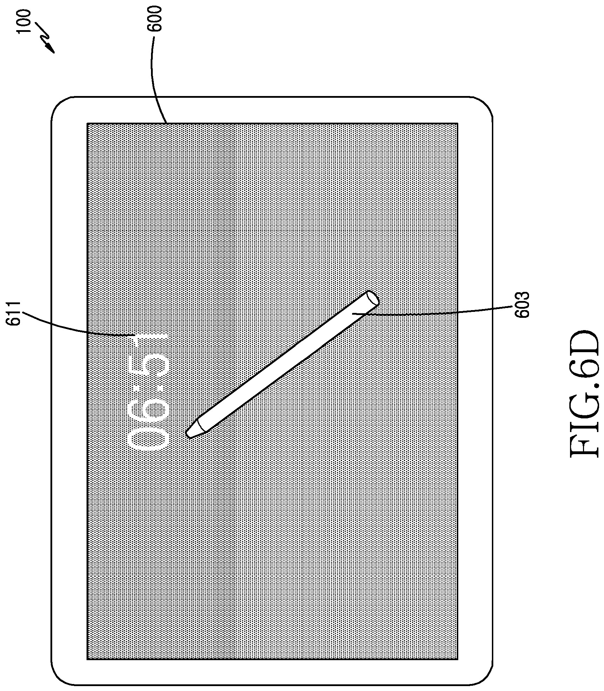

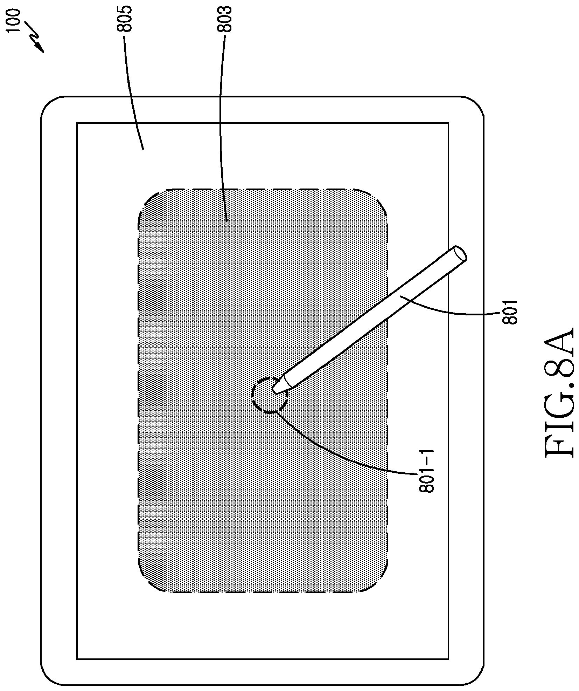

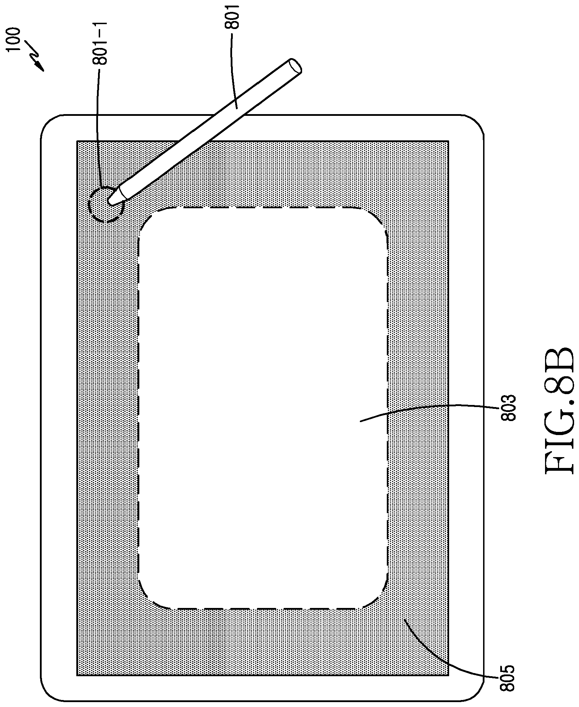

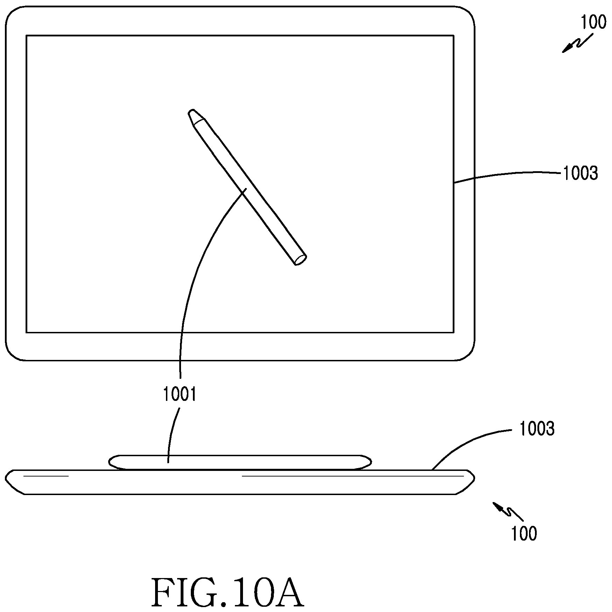

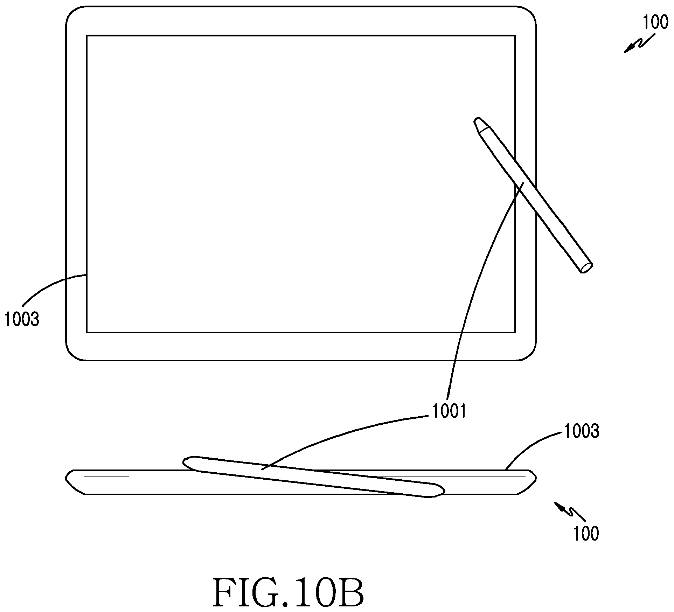

In addition, in accordance with certain embodiments of the present disclosure, the electronic device may further include an electronic pen control module. For one example, as shown in FIG. 6B, upon detecting that a coordinate of an electronic pen 603 is fixed (that is, the electronic pen 603 is stationary) while a memo program 601 is executed on a display 600, the electronic pen control module recognizes that the user of the electronic device has paused use of the electronic device when a time if the coordinate of the electronic pen 603 is fixed for greater than a reference time. Accordingly, as shown in FIG. 6C, the electronic pen control module may perform a request operation to turn off the display 600. Herein, the electronic pen control module may perform a request operation such that the electronic device operates in a sleep mode as well as the display 600 being turned off. Also, as shown in FIG. 6D, the electronic pen control module may perform a request operation to display a clock 611 on the display 600. Herein, the electronic pen control module may perform a request operation to display a screensaver to inform the user that an operation of the electronic device is currently paused in addition to displaying the clock. For another example, as shown in FIGs. 8A and 8B, the electronic pen control module may perform a request operation to verify whether a coordinate 801-1 of an electronic pen 801 (specifically a coordinate of part of the pen, for instance the pen tip) is included in any of a first region 803 or a second region 805 of a display and to change a state of the display. By "included in a region of a display" it is meant that the pen is positioned above or touching the portion of the display displaying that region. For another example, as shown in FIGs. 10A and 10B, the electronic pen control module may perform a request operation to compare a slope of an electronic pen with a reference slope and change a state of a display.

Names of the components of the programming module 300 according to one embodiment of the present disclosure may differ according to kinds of types of operating systems. Also, the programming module 300 according to one embodiment of the present disclosure may include at least one of the above described components. Some of the components may be omitted. The programming module 300 according to one embodiment of the present disclosure may further include additional other components.

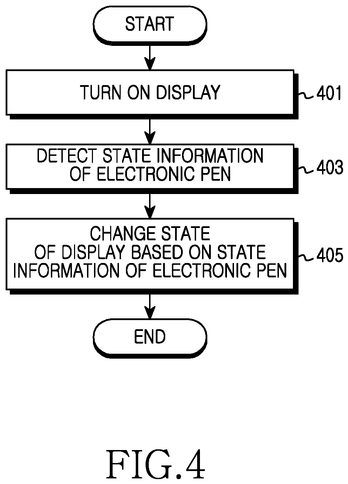

FIG. 4 is a flowchart illustrating a process of changing a state of a display based on state information of an electronic pen in an electronic device according to one embodiment of the present disclosure.

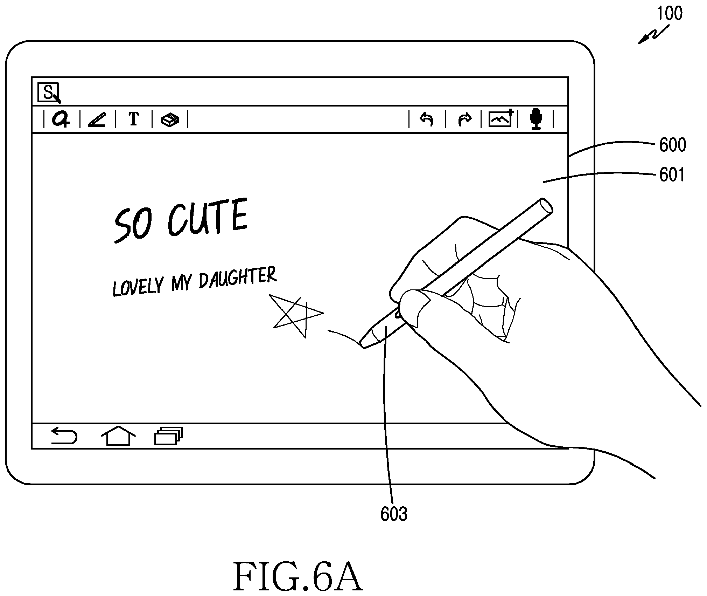

Referring to FIG. 4, in step 401, the electronic device turns on a display. For example, as shown in FIGs. 6A and 6B, the electronic device may display a memo program 601 on a display 600.

In step 403, the electronic device detects state information of an electronic pen. For example, the state information of the electronic pen may include a coordinate of the electronic pen (for instance, a coordinate of part of the pen, for instance a portion normally used to point to the display, for instance the tip), information indicating whether a coordinate of the electronic pen is fixed (whether the pen is stationary), a time for which a coordinate of the electronic pen is fixed, and a slope of the electronic pen (for instance the inclination and/or orientation of the longitudinal axis of the pen relative to the plane of the display or relative to a gravitational axis). Herein, the electronic device may verify the slope of the electronic pen using a tilt sensor included in the electronic pen. Herein, the electronic device may receive a slope value of the electronic device using local-area wireless communication from the electronic pen.

Thereafter, in step 405, the electronic device may change a state of the display based on the state information of the electronic pen. For one example, when a time that a coordinate of the electronic pen 603 shown in FIG. 6B is fixed is greater than a reference time, the electronic device may recognize that a user of the electronic device pauses for use of the electronic device. Accordingly, as shown in FIG. 6C, the electronic device may turn off the display 600. Herein, the electronic device may operate in a sleep mode as well as the display 600 is turned off. Also, as shown in FIG. 6D, the electronic device may display a clock 611 on the display 600. Herein, the electronic device may display a screensaver to inform that an operation of the electronic device pauses currently in addition to the clock. For another example, as shown in FIGs. 8A and 8B, the electronic device may verify whether a coordinate 801-1 of an electronic pen 801 is included in any of a first region 803 or a second region 805 of a display and change a state of the display. For another example, as shown in FIGs. 10A and 10B, the electronic device may compare a slope of an electronic pen with a reference slope and change a state of a display.

Thereafter, the electronic device may end the algorithm of FIG. 4 or steps 403 and 405 may be repeated.

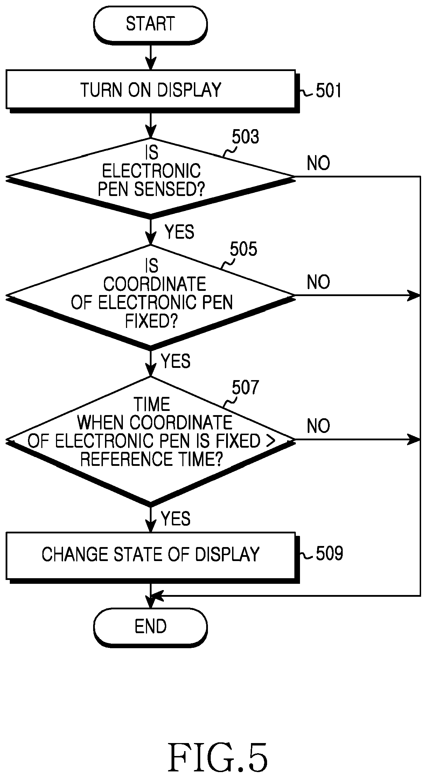

FIG. 5 is a flowchart illustrating a process of changing a state of a display based on a time for which a coordinate of an electronic pen is fixed in an electronic device according to one embodiment of the present disclosure.

Referring to FIG. 5, in step 501, the electronic device turns on a display. For example, as shown in FIGs. 6A and 6B, the electronic device may display a memo program 601 on a display 600.

In step 503, the electronic device may verify whether an electronic pen is sensed. For example, the electronic device may sense a touch input by the electronic pen by a capacitive type sensor through the display 600. Alternatively, movement of the pen may be sensed by a sensor within the pen (for instance, an accelerometer) and a movement signal may be transmitted to the electronic device. Other options for sensing the pen will be apparent to the skilled person, for instance the user pressing a button on the pen. The display 600 may include a digitizer and sense input by the electronic pen by an EMI type. If the electronic pen is not sensed, the electronic device may end the algorithm of FIG. 5.

When the electronic pen is sensed, in step 505, the electronic device may verify whether a coordinate of the electronic pen is fixed. For one example, as shown in FIG. 6A, when a user of the electronic device writes contents on a memo program 601 using an electronic pen 603, the electronic device may recognize that a coordinate input by the electronic pen 603 is continuously changed. For another example, as shown in FIG. 6B, when the electronic pen 603 is put on the display 600, the electronic device may recognize that a coordinate input by the electronic pen 603 is fixed. If the coordinate of the electronic pen is not fixed, the electronic device may recognize that the electronic device is being used continuously by the electronic pen and end the algorithm of FIG. 5.

When the coordinate of the electronic pen is fixed, in step 507, the electronic device may compare a time when the coordinate of the electronic pen is fixed with a reference time. If the time when the coordinate of the electronic pen is fixed is less than or equal to the reference time, the electronic device may recognize that the user may use the electronic pen again. Accordingly, the electronic device may end the algorithm of FIG. 5. Also, the electronic device may compare a time when a coordinate of the electronic pen is fixed with the reference time continuously.

When the time when the coordinate of the electronic pen is fixed is greater than the reference time, in step 509, the electronic device may change a state of the display. For one example, when the time that a coordinate of the electronic pen 603 shown in FIG. 6B is fixed is greater than the reference time, the electronic device may recognize that the user of the electronic device pauses for use of the electronic device. Accordingly, as shown in FIG. 6C, the electronic device may turn off the display 600. Herein, the electronic device may operate in a sleep mode as well as the display 600 is turned off. Also, as shown in FIG. 6D, the electronic device may display a clock 611 on the display 600. Herein, the electronic device may display a screensaver to inform that an operation of the electronic device pauses currently in addition to the clock.

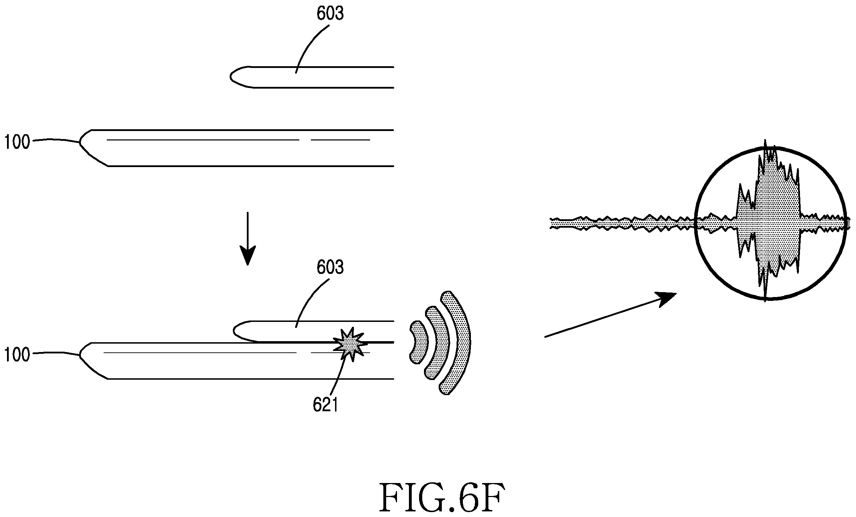

In addition, as shown in FIG. 6F, the electronic device 100 may sense the electronic pen 603 using a pattern of a sound generated by an impact 621 with the electronic pen 603. Herein, the electronic device may verify whether the coordinate of the electronic pen is fixed in step 505 or assume that the coordinate of the electronic pen is fixed, and may compare the time when the coordinate of the electronic pen is fixed with the reference time in step 507.

Thereafter, the electronic device may end the algorithm of FIG. 5.

In the above-described one embodiment of the present disclosure, the electronic device may determine whether the electronic pen is used and change the state of the display.

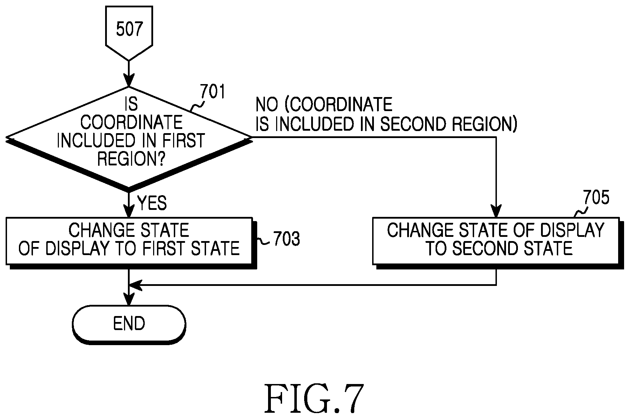

In another embodiment of the present disclosure, the electronic device may change, as shown in FIG. 7, a state of the display based on a coordinate determined that the electronic pen pauses.

FIG. 7 is a flowchart illustrating a process of changing a state of a display based on an area including a coordinate of an electronic pen in an electronic device according to one embodiment of the present disclosure.

Referring to FIG. 7, when the time when the coordinate of the electronic pen is fixed is greater than the reference time in step 507 of FIG. 5, in step 701, the electronic device may verify whether the coordinate of the electronic pen is included in a first region (that is, positioned above the display first region). For example, as shown in FIGs. 8A and 8B, the electronic device may verify whether a coordinate 801-1 of an electronic pen 801 is included in any of a first region 803 or a second region 805 of a display.

When the coordinate of the electronic pen is included in the first region, the electronic device may change a state of the display to a first state. For example, as shown in FIG. 8A, when the coordinate 801-1 of the electronic pen 801 is included in the first region 803, the electronic device may turn off, as shown in FIG. 6C, the display 600. Herein, the electronic device may operate in a sleep mode as well as the display 600 is turned off.

When the coordinate of the electronic pen is included in the second region, in step 705, the electronic device may change a state of the display to a second state. For example, as shown in FIG. 8B, when the coordinate 801-1 of the electronic pen 801 is included in the second region 805, the electronic device may display, as shown in FIG. 6D, a clock 611 on a display 600. Herein, the electronic device may display a screensaver which may inform that an operation of the electronic device pauses currently in addition to the clock.

The electronic device may end the algorithm of FIG. 7.

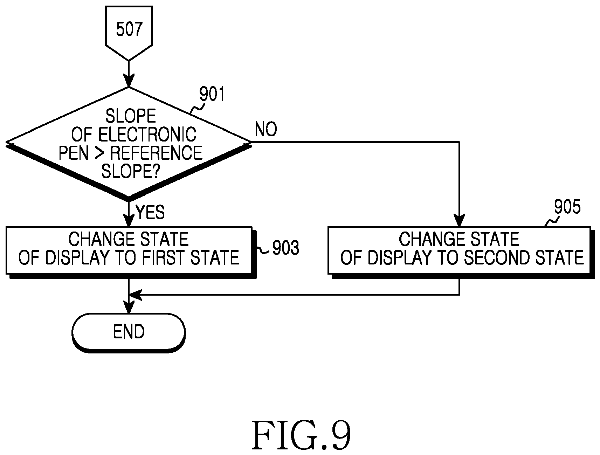

FIG. 9 is a flowchart illustrating a process of changing a state of a display based on a slope of an electronic pen in an electronic device according to one embodiment of the present disclosure.

Referring to FIG. 9, when the time when the coordinate of the electronic pen is fixed is greater than the reference time in step 507 of FIG. 5, in step 901, the electronic device may verify whether a slope of the electronic pen is greater than or less than a reference slope. The slope of the pen may be relative to the plane of the display screen or relative to a gravitational axis. Herein, the electronic device may verify the slope of the electronic pen using a tilt sensor included in the electronic pen. Herein, the electronic device may receive a slope value of the electronic pen using local-area wireless communication from the electronic pen.

If the slope of the electronic pen is greater than the reference slope, in step 903, the electronic device may change a state of the display to a first state. For example, as shown in FIG. 10B, recognizing that a slope of an electronic pen 1001 is greater than the reference slope because the electronic pen 1001 is leant on the electronic device, the electronic device may turn off, as shown in FIG. 6C, a display 600. Herein, the electronic device may operate in a sleep mode as well as the display 600 is turned off.

When the slope of the electronic pen is less than or equal to the reference slope, in step 905, the electronic device may change a state of the display to a second state. For example, as shown in FIG. 10A, recognizing that the slope of the electronic pen 1001 is less than or equal to the reference slope because the electronic pen 1001 is put on the electronic device, the electronic device may display, as shown in FIG. 6D, a clock 611 on a display 600. Herein, the electronic device may display a screensaver which may inform that an operation of the electronic device pauses currently in addition to the clock.

In addition, the electronic device may compare a height of the electronic pen with a reference height and change a state of the display.

The electronic device may end the algorithm of FIG. 9.

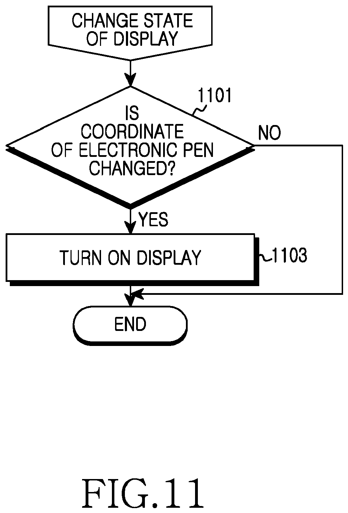

FIG. 11 is a flowchart illustrating a process of turning on a display when a coordinate of an electronic pen is changed (that is, the pen is moved) after a state of a display is changed in an electronic device according to one embodiment of the present disclosure.

Referring to FIG. 11, after changing a state of a display, in step 1101, the electronic device may verify whether a coordinate of an electronic pen is changed. That is, the electronic device may verify whether the coordinate of the electronic pen is changed to determine whether a user thereof will use the electronic pen again. If the coordinate of the electronic pen is not changed, the electronic device may end the algorithm of FIG. 11.

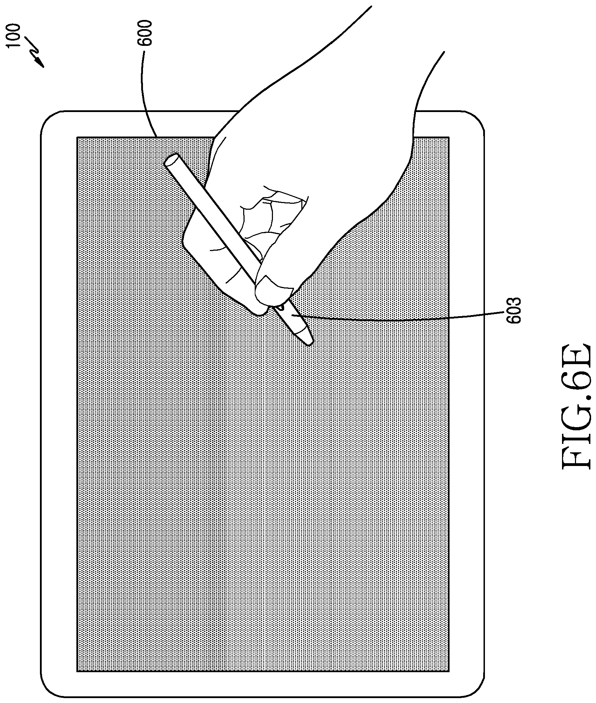

When the coordinate of the electronic pen is changed, in step 1103, the electronic device may turn on the display. For example, as shown in FIGs. 6C and 6D, if the user operates, as shown in FIG. 6E, an electronic pen 603 which is put on a display 600, the electronic device may recognize that the coordinate of the electronic pen 603 is changed. Accordingly, the electronic device recognizes that the user uses the electronic device again. As shown in FIG. 6A, the electronic device may display a memo program 601 on the display 600. Herein, the electronic device may hold a work state performed before the state of the display is changed.

Thereafter, the electronic device may end the algorithm of the FIG. 11.

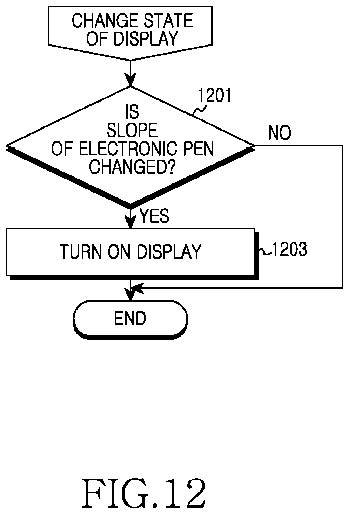

FIG. 12 is a flowchart illustrating a process of turning on a display when a slope of an electronic pen is changed after a state of a display is changed in an electronic device according to another embodiment of the present disclosure.

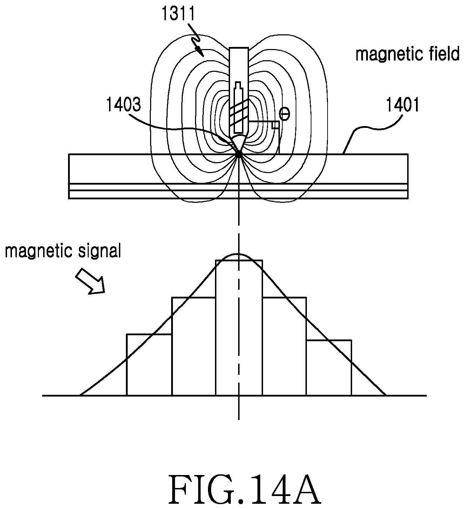

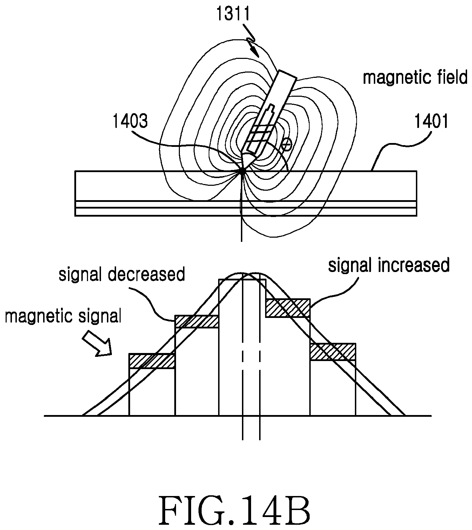

Referring to FIG. 12, after changing a state of a display, in step 1201, the electronic device may verify whether a slope of an electronic pen is changed. That is, the electronic device may verify whether the slope of the electronic pen is changed to determine whether a user thereof will use the electronic pen again. For example, when the electronic pen uses, as shown in FIG. 13, an EMI type, the electronic device may verify, as shown in FIGs. 14A and 14B, the slope of the electronic pen. A description will be given for a method of verifying the slope of the electronic pen with reference to FIGs. 14A and 14B. If the slope of the electronic pen is not changed, the electronic device may end the algorithm of FIG. 12.

When the slope of the electronic pen is changed, in step 1203, the electronic device may turn on the display. For example, as shown in FIGs. 6C and 6D, if the user operates, as shown in FIG. 6E, an electronic pen 603 which is put on a display 600, the electronic device may recognize that the slope of the electronic pen 603 is changed. Accordingly, the electronic device recognizes that the user uses the electronic device again. As shown in FIG. 6A, the electronic device may display a memo program 601 on the display 600. Herein, the electronic device may hold a work state performed before the state of the display is changed.

Thereafter, the electronic device may end the algorithm of the FIG. 12.

FIG. 13 illustrates an electronic device and an electronic pen for describing when the electronic pen operates by an EMI type according to one embodiment of the present disclosure.

Referring to FIG. 13, the electronic device 100 may include a touch screen 1300 in which a window 1301, a transparent touch panel 1302, a display 1304, and a pen touch panel 1303 are successively mounted in an internal mounting space of a certain case frame. The transparent touch panel 1302 may be mounted by a method of being deposited on a lower surface of the window 1301. The display 1304 such as an LCD or an OLED may be mounted on a lower side of the transparent touch panel 1302.

The pen touch panel 1303 may include a sensor Printed Circuit Board (PCB) in which a plurality of X-axis coil arrays and a plurality of Y-axis coil arrays are disposed to be orthogonal with each other, a shield plate which is installed on a lower portion of the sensor PCB to block external electromagnetic waves, and a connector which is electrically connected with a main board 1305 of the electronic device 100. Also, it is preferable that the pen touch panel 1303 is disposed on a lower portion of the separate touch panel 1302 formed of transparent materials and the display 1304 because the display 1304 includes a light shielding coil.

In accordance with various embodiments of the present disclosure, if an Alternating Current (AC) signal is provided to a coil formed in a sensing pad of the pen touch panel 1303, the electronic device 100 operates. If an electronic pen 1311 is approached to this touch screen 1300 within a certain distance d, the coil of the pen touch panel 1303 adjacent to the electronic pen 1311 may form a magnetic field. Also, the electronic pen 1311 resonates with the formed magnetic field and generates a resonance frequency. A processor of the electronic device 100 may sense the generated resonance frequency and ascertain a corresponding touch position.

FIGs. 14A and 14B illustrate an example of verifying an angle of an electronic pen and an electronic device when the electronic pen operates by an EMI type according to one embodiment of the present disclosure.

Referring to FIGs. 14A and 14B, the electronic device may sense, as shown in FIG. 13, an electromagnetic force generated in the electronic pen 1311. The electronic device may sense a change in strength of the electromagnetic force according to an angle θ between the electronic pen 1311 and the display 1401.

For one example, as shown in FIG. 14A, when the angle θ between the electronic pen 1311 and the display 1401 is 90 degrees, the electronic device may detects the strength of the electromagnetic force in which left and right sides are symmetric centred on a touch recognition point 1403.

For another example, as shown in FIG. 14B, the angle θ between the electronic pen 1311 and the display 1401 is less than 90 degrees, the electronic device may detects the strength of the electromagnetic force in which a right side is stronger than a left side centred on the touch recognition point 1403.

The electronic device may determine the angle between the electronic pen 1311 and the display 1401 using the change in the strength of the electromagnetic force.

In accordance with various embodiments of the present disclosure, as described above, the electronic device may operate a function corresponding to a corresponding angle using the angle between the electronic pen 1311 and the display 1401.

In the above-described one embodiment of the present disclosure, the electronic device turns off the display based on the state information of the electronic pen. In another embodiment of the present disclosure, the electronic device may turn off at least one of a backlight of the display or a touch panel included in the display based on the state information of the electronic pen.

As described above, the electronic device changes the state of the display based on the state information of the electronic pen. Therefore, the user of the electronic device may reduce the number of operations for pausing for or resuming the electronic device.

It will be appreciated that embodiments of the present disclosure according to the claims and description in the specification may be realized in the form of hardware, software or a combination of the hardware and the software.

Any such software may be stored in a computer readable storage medium. The computer readable storage medium stores one or more programs (software modules), each of the one or more programs comprising instructions, which when executed by the one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of a memory such as, for example, a RAM, memory chips, a device or integrated circuits or on an optically or magnetically readable medium such as, for example, a Compact Disc (CD), DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising codes for implementing an apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present disclosure has been particularly shown and described with reference to exemplary embodiments thereof, it will be understood by those skilled in the art that various changes in form and details may be made therein without departing from the scope of the present disclosure as defined by the appended claims.

## Claims

1. A method of operating an electronic device (100) having a display (600), the method comprising:
sensing an electronic pen (603; 801; 1001);
determining whether a coordinate corresponding to the sensed electronic pen (603; 801; 1001) is maintained during a reference time; and
in response to determining that the coordinate is maintained during the reference time,
changing a state of the display (600) from an initial state; wherein changing the state of the display comprises turning off at least one of the display (600), a backlight of the display (600) and a touch panel (1302) included in the display (600) in response to determining that the coordinate corresponding to the sensed electronic pen (603; 801; 1001) is maintained during the reference time.

2. The method of claim 1, further including changing a mode of the electronic device (100) to a sleep mode when the display (600) is turned off.

3. The method of claim 1, wherein changing the state of the display comprises changing the state of the display (600) to a first state if the coordinate corresponding to the sensed electronic pen (603; 801; 1001) is included in a first region of the display (600) in response to determining that the coordinate corresponding to the sensed electronic pen (603; 801; 1001) is maintained during the reference time.

4. The method of claim 1, wherein changing the state of the display comprises changing the state of the display (600) based on a slope of the electronic pen (603; 801; 1001) in response to determining that the coordinate corresponding to the sensed electronic pen (603; 801; 1001) is maintained during the reference time.

5. The method of any one of the preceding claims, further comprising:
turning the display (600) on when the coordinate corresponding to the sensed electronic pen (603; 801; 1001) is changed after the state of the display is changed from the initial state.

6. The method of any one of the preceding claims, further comprising:
turning on the display (600) when a slope of the electronic pen (603; 801; 1001) is changed after the state of the display is changed from the initial state.

7. An electronic device (100; 200) comprising:
a memory (130; 220);
a display (150; 260; 600); and
a processor (120; 210) configured to control:
sensing an electronic pen (603; 801; 1001); determining whether a coordinate corresponding to the sensed electronic pen (603; 801; 1001) is maintained during a reference time, and
in response to determining the coordinate corresponding to the sensed electronic pen (603;
801; 1001) is maintained during the reference time, changing a state of the display (600) from an initial state; wherein changing the state of the display comprises the processor (120; 210) being configured to turn off at least one of the display (600), a backlight of the display (600) and a touch panel (1302) included in the display (600) in response to determining the coordinate corresponding to the sensed electronic pen (603; 801; 1001) is maintained during the reference time.

8. The electronic device of claim 7, wherein the processor (120; 210) is further configured to change a mode of the electronic device (100) to a sleep mode when the display (600) is turned off.

9. The electronic device of claim 7, wherein changing the state of the display comprises the processor (120; 210) being configured to change the state of the display to a first state if the coordinate corresponding to the sensed electronic pen is included in a first region of the display in response to determining the coordinate corresponding to the sensed electronic pen (603; 801; 1001) is maintained during the reference time.

10. The electronic device of claim 7, wherein changing the state of the display comprises the processor (120; 210) being further configured to change the state of the display based on a slope of the electronic pen (603; 801; 1001) in response to determining the coordinate corresponding to the sensed electronic pen (603; 801; 1001) is maintained during the reference time.

11. The electronic device of any one of claims 7 to 10, wherein the processor (120; 210) is further configured to change the state of the display further by turning on the display when a slope of the electronic pen (603; 801; 1001) is changed after the state of the display is changed from the initial state.

12. The electronic device of any one of claims 7 to 10, wherein the processor (120; 210) is further configured to change the state of the display further by turning on the display when the coordinate corresponding to the sensed electronic pen (603; 801; 1001) is changed after the state of the display is changed from the initial state.

## Patentansprüche

1. Ein Verfahren zum Betrieb einer elektronischen Vorrichtung (100) mit einer Anzeige (600), wobei das Verfahren Folgendes umfasst:
Erkennen eines elektronischen Stifts (603; 801; 1001);
Bestimmen, ob eine dem erkannten elektronischen Stift (603; 801; 1001) entsprechende Koordinate während einer Bezugszeit beibehalten wurde; und
Ändern eines Zustands der Anzeige (600) gegenüber einem ursprünglichen Zustand infolge der Bestimmung, dass die Koordinate während der Bezugszeit beibehalten wurde; wobei die Änderung des Zustands der Anzeige umfasst, dass zumindest die Anzeige (600), eine Hintergrundbeleuchtung der Anzeige (600) und/oder ein in der Anzeige (600) enthaltener Berührungsbildschirm (1302) ausgeschaltet wird/werden, wobei dies infolge der Bestimmung erfolgt, dass die dem erkannten elektronischen Stift (603; 801; 1001) entsprechende Koordinate während der Bezugszeit beibehalten wurde.

2. Das Verfahren nach Anspruch 1, das weiter die Änderung eines Modus der elektronischen Vorrichtung (100) in einen Ruhemodus umfasst, wenn die Anzeige (600) ausgeschaltet ist.

3. Das Verfahren nach Anspruch 1, wobei die Änderung des Zustands der Anzeige umfasst, dass der Zustand der Anzeige (600) in einen ersten Zustand geändert wird, wenn die dem erkannten elektronischen Stift (603; 801; 1001) entsprechende Koordinate in einem ersten Bereich der Anzeige (600) enthalten ist, wobei dies infolge der Bestimmung erfolgt, dass die dem erkannten elektronischen Stift (603; 801; 1001) entsprechende Koordinate während der Bezugszeit beibehalten wurde.

4. Das Verfahren nach Anspruch 1, wobei die Änderung des Zustands der Anzeige umfasst, dass der Zustand der Anzeige (600) basierend auf einer Neigung des elektronischen Stifts (603; 801; 1001) geändert wird, wobei dies infolge der Bestimmung erfolgt, dass die dem erkannten elektronischen Stift (603; 801; 1001) entsprechende Koordinate während der Bezugszeit beibehalten wurde.

5. Das Verfahren nach einem der vorhergehenden Ansprüche, wobei dieses weiter Folgendes umfasst:
Einschalten der Anzeige (600), wenn die dem erkannten elektronischen Stift (603; 801; 1001) entsprechende Koordinate geändert wird, nachdem der Zustand der Anzeige gegenüber dem ursprünglichen Zustand geändert wurde.

6. Das Verfahren nach einem der vorhergehenden Ansprüche, wobei dieses weiter Folgendes umfasst:
Einschalten der Anzeige (600), wenn eine Neigung des elektronischen Stifts (603; 801; 1001) geändert wird, nachdem der Zustand der Anzeige gegenüber dem ursprünglichen Zustand geändert wurde.

7. Eine elektronische Vorrichtung (100, 200), die Folgendes umfasst:
einen Arbeitsspeicher (130; 220);
eine Anzeige (150; 260; 600); und
eine Verarbeitungseinheit (120; 210), die zur Steuerung von Folgendem eingerichtet ist:
Erkennen eines elektronischen Stifts (603; 801; 1001);
Bestimmen, ob eine dem erkannten elektronischen Stift (603; 801; 1001) entsprechende Koordinate während einer Bezugszeit beibehalten wurde, und
Ändern eines Zustands der Anzeige (600) gegenüber einem ursprünglichen Zustand infolge der Bestimmung, dass die dem erkannten elektronischen Stift (603; 801; 1001) entsprechende Koordinate während der Bezugszeit beibehalten wurde; wobei die Änderung des Zustands der Anzeige umfasst, dass die Verarbeitungseinheit (120; 210) eingerichtet ist, um zumindest die Anzeige (600), eine Hintergrundbeleuchtung der Anzeige (600) und/oder einen in der Anzeige (600) enthaltenen Berührungsbildschirm (1302) auszuschalten, wobei dies infolge der Bestimmung erfolgt, dass die dem erkannten elektronischen Stift (603; 801; 1001) entsprechende Koordinate während der Bezugszeit beibehalten wurde.

8. Die elektronische Vorrichtung nach Anspruch 7, wobei die Verarbeitungseinheit (120; 210) weiter eingerichtet ist, um einen Modus der elektronischen Vorrichtung (100) in einen Ruhemodus zu ändern, wenn die Anzeige (600) ausgeschaltet ist.

9. Die elektronische Vorrichtung nach Anspruch 7, wobei die Änderung des Zustands der Anzeige umfasst, dass die Verarbeitungseinheit (120; 210) eingerichtet ist, um den Zustand der Anzeige in einen ersten Zustand zu ändern, wenn die dem erkannten elektronischen Stift entsprechende Koordinate in einem ersten Bereich der Anzeige enthalten ist, wobei dies infolge der Bestimmung erfolgt, dass die dem erkannten elektronischen Stift (603; 801; 1001) entsprechende Koordinate während der Bezugszeit beibehalten wurde.

10. Die elektronische Vorrichtung nach Anspruch 7, wobei die Änderung des Zustands der Anzeige umfasst, dass die Verarbeitungseinheit (120; 210) weiter eingerichtet ist, um den Zustand der Anzeige basierend auf einer Neigung des elektronischen Stifts (603; 801; 1001) zu ändern, wobei dies infolge der Bestimmung erfolgt, dass die dem erkannten elektronischen Stift (603; 801; 1001) entsprechende Koordinate während der Bezugszeit beibehalten wurde.

11. Die elektronische Vorrichtung nach einem der Ansprüche 7 bis 10, wobei die Verarbeitungseinheit (120; 210) weiter eingerichtet ist, um den Zustand der Anzeige weiter zu ändern, indem die Anzeige eingeschaltet wird, wenn eine Neigung des elektronischen Stifts (603; 801; 1001) geändert wird, nachdem der Zustand der Anzeige gegenüber dem ursprünglichen Zustand geändert wurde.

12. Die elektronische Vorrichtung nach einem der Ansprüche 7 bis 10, wobei die Verarbeitungseinheit (120; 210) weiter eingerichtet ist, um den Zustand der Anzeige weiter zu ändern, indem die Anzeige eingeschaltet wird, wenn die dem erkannten elektronischen Stift (603; 801; 1001) entsprechende Koordinate geändert wird, nachdem der Zustand der Anzeige gegenüber dem ursprünglichen Zustand geändert wurde.

## Revendications

1. Un procédé d'actionnement d'un dispositif électronique (100) possédant un dispositif d'affichage (600), le procédé comprenant :
la détection d'un stylo électronique (603; 801; 1001),
la détermination si une coordonnée correspondant au stylo électronique détecté (603; 801; 1001) est maintenue au cours d'une durée de référence, et
en réponse à la détermination que la coordonnée est maintenue au cours de la durée de référence, la modification d'un état du dispositif d'affichage (600) à partir d'un état initial, où la modification de l'état du dispositif d'affichage comprend la mise hors tension d'au moins un élément parmi le dispositif d'affichage (600), un rétroéclairage du dispositif d'affichage (600) et un panneau tactile (1302) inclus dans le dispositif d'affichage (600) en réponse à la détermination que la coordonnée correspondant au stylo électronique détecté (603; 801; 1001) est maintenue au cours de la durée de référence.

2. Le procédé selon la Revendication 1, comprenant en outre la modification d'un mode du dispositif électronique (100) vers un mode sommeil lorsque le dispositif d'affichage (600) est mis hors tension.

3. Le procédé selon la Revendication 1, où la modification de l'état du dispositif d'affichage comprend la modification de l'état du dispositif d'affichage (600) vers un premier état si la coordonnée correspondant au stylo électronique détecté (603; 801; 1001) est incluse dans une première zone du dispositif d'affichage (600) en réponse à la détermination que la coordonnée correspondant au stylo électronique détecté (603; 801; 1001) est maintenue au cours de la durée de référence.

4. Le procédé selon la Revendication 1, où la modification de l'état du dispositif d'affichage comprend la modification de l'état du dispositif d'affichage (600) en fonction d'une inclinaison du stylo électronique (603; 801; 1001) en réponse à la détermination que la coordonnée correspondant au stylo électronique détecté (603; 801; 1001) est maintenue au cours de la durée de référence.

5. Le procédé selon l'une quelconque des Revendications précédentes, comprenant en outre :
la mise sous tension du dispositif d'affichage (600) lorsque la coordonnée correspondant au stylo électronique détecté (603; 801; 1001) est modifiée après la modification de l'état du dispositif d'affichage à partir de l'état initial.

6. Le procédé selon l'une quelconque des Revendications précédentes, comprenant en outre :
la mise sous tension du dispositif d'affichage (600) lorsqu'une inclinaison du stylo électronique (603; 801; 1001) est modifiée après la modification de l'état du dispositif d'affichage à partir de l'état initial.

7. Un dispositif électronique (100; 200) comprenant :
une mémoire (130; 220),
un dispositif d'affichage (150; 260; 600), et
un processeur (120; 210) configuré de façon à commander :
la détection d'un stylo électronique (603; 801; 1001),
la détermination si une coordonnée correspondant au stylo électronique détecté (603; 801; 1001) est maintenue au cours d'une durée de référence, et
en réponse à la détermination que la coordonnée correspondant au stylo électronique détecté (603; 801; 1001) est maintenue au cours de la durée de référence, la modification d'un état du dispositif d'affichage (600) à partir d'un état initial, où la modification de l'état du dispositif d'affichage comprend la configuration du processeur (120; 210) de façon à mettre hors tension au moins un élément parmi le dispositif d'affichage (600), un rétroéclairage du dispositif d'affichage (600) et un panneau tactile (1302) inclus dans le dispositif d'affichage (600) en réponse à la détermination que la coordonnée correspondant au stylo électronique détecté (603; 801; 1001) est maintenue au cours de la durée de référence.

8. Le dispositif électronique selon la Revendication 7, où le processeur (120; 210) est configuré en outre de façon à modifier un mode du dispositif électronique (100) vers un mode sommeil lorsque le dispositif d'affichage (600) est mis hors tension.

9. Le dispositif électronique selon la Revendication 7, où la modification de l'état du dispositif d'affichage comprend la configuration du processeur (120; 210) de façon à modifier l'état du dispositif d'affichage vers un premier état si la coordonnée correspondant au stylo électronique détecté est incluse dans une première zone du dispositif d'affichage en réponse à la détermination que la coordonnée correspondant au stylo électronique détecté (603; 801; 1001) est maintenue au cours de la durée de référence.

10. Le dispositif électronique selon la Revendication 7, où la modification de l'état du dispositif d'affichage comprend la configuration en outre du processeur (120; 210) de façon à modifier l'état du dispositif d'affichage en fonction d'une inclinaison du stylo électronique (603; 801; 1001) en réponse à la détermination que la coordonnée correspondant au stylo électronique détecté (603; 801; 1001) est maintenue au cours de la durée de référence.

11. Le dispositif électronique selon l'une quelconque des Revendications 7 à 10, où le processeur (120; 210) est configuré en outre de façon à modifier l'état du dispositif d'affichage en outre par la mise sous tension du dispositif d'affichage lorsqu'une inclinaison du stylo électronique (603; 801; 1001) est modifiée après la modification de l'état du dispositif d'affichage à partir de l'état initial.

12. Le dispositif électronique selon l'une quelconque des Revendications 7 à 10, où le processeur (120; 210) est configuré en outre de façon à modifier l'état du dispositif d'affichage en outre par la mise sous tension du dispositif d'affichage lorsque la coordonnée correspondant au stylo électronique détecté (603; 801; 1001) est modifiée après la modification de l'état du dispositif d'affichage à partir de l'état initial.
